(19) Europäisches Patentamt
European Patent Office
Office européen des brevets

(11) EP 1 370 141 B1

(12) **FASCICULE DE BREVET EUROPEEN**

(45) Date de publication et mention de la délivrance du brevet:
**05.01.2005 Bulletin 2005/01**

(21) Numéro de dépôt: **02708410.2**

(22) Date de dépôt: **19.02.2002**

(51) Int Cl.[7]: **A01N 43/40**
// A01N43:40, A01N47:12

(86) Numéro de dépôt international:
**PCT/FR2002/000621**

(87) Numéro de publication internationale:
**WO 2002/069714 (12.09.2002 Gazette 2002/37)**

(54) **COMPOSITIONS FONGICIDES A BASE DE DERIVE DE PYRIDYLMETHYLBENZAMIDE ET DE PROPAMOCARBE**

FUNGIZIDE ZUSAMMENSETZUNGEN AUF DER BASIS VON PYRIDYLMETHYLBENZAMID-DERIVATEN UND PROPAMOCARB

NOVEL FUNGICIDE COMPOSITIONS BASED ON PYRIDYLMETHYLBENZAMIDE AND PROPAMOCARB DERIVATIVE

(84) Etats contractants désignés:
**AT BE CH CY DE DK ES FI FR GB GR IE IT LI LU MC NL PT SE TR**
Etats d'extension désignés:
**RO**

(30) Priorité: **08.03.2001 FR 0103141**

(43) Date de publication de la demande:
**17.12.2003 Bulletin 2003/51**

(73) Titulaire: **Bayer CropScience S.A.**
**69009 Lyon (FR)**

(72) Inventeurs:
- **EMERY, Jane, Catherine,**
**Aventis CropScience UK Ltd**
**Ongar, Essex CM5 OHW (GB)**
- **RUSSELL, Philip, Eric**
**Great Shelford, Cambridge CB2 5AN (GB)**
- **BARDSLEY, Richard A.,**
**Aventis CropScience UK Ltd.**
**Ongar, Essex CM5 OHW (GB)**
- **DANCER, Jane, Elizabeth**
**CB1 1DT Cambridge (GB)**
- **MERCER, Richard**
**F-69130 Ecully (FR)**
- **HOLAH, David, Stanley**
**West Wratting, Cambridgeshire CB1 5NE (GB)**

(56) Documents cités:
**WO-A-99/42447**

- **The Pesticide Manual, 12th Edition, (2000), C.D.S. Tomlin, British Crop Protection Council, pp.769-770 No643**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 370 141 B1

Printed by Jouve, 75001 PARIS (FR)

## Description

La présente invention a pour objet de nouvelles compositions fongicides comprenant au moins un dérivé de pyridylméthylbenzamide et du propamocarbe ou un de ses sels, compositions destinées notamment à la protection des cultures. Elle concerne également un procédé pour protéger les cultures contre les maladies fongiques par application de ces compositions.

On connaît, notamment par la demande de brevet européen EP-A-1 056 723, des composés de type pyridylméthylbenzamide à action fongicide, permettant de prévenir la croissance et le développement de champignons phytopathogènes qui attaquent ou sont susceptibles d'attaquer les cultures.

D'autre part, le propamocarbe est une matière active fongicide largement connue et commercialisée, notamment sous le nom de Prévicur®. Le propamocarbe, sous forme de sel avec l'acide chlorhydrique, est par exemple décrit dans les brevets DE 1567169 et DE 1643040 ainsi que dans "The Pesticide Manual", a World Compendium, 11$^{éme}$ édition, C. D. S. Tomlin, British Crop Protection Council, pages 1015-17, n° 599.

Cependant, il est toujours souhaitable d'améliorer les produits utilisables par l'agriculteur pour lutter contre les maladies fongiques des cultures, et notamment contre les mildious.

Il est également toujours souhaitable de réduire les doses de produits chimiques épandus dans l'environnement pour lutter contre les attaques fongiques des cultures, notamment en réduisant les doses d'application des produits.

Il est enfin toujours désirable d'augmenter le nombre de produits antifongiques à la disposition de l'agriculteur afin que celui-ci trouve parmi eux le mieux adapté à son usage particulier.

Un but de l'invention est donc de fournir une nouvelle composition fongicide, utile pour résoudre les problèmes exposés ci-dessus.

Un autre but de l'invention est de proposer une nouvelle composition fongicide utile dans le traitement préventif et curatif des maladies fongiques, par exemple des solanées, des céréales et de la vigne.

Un autre but de l'invention est de proposer une nouvelle composition fongicide présentant une efficacité améliorée contre les mildious, les oïdiums, les rouilles, les botrytis des céréales, des solanées et de la vigne.

Un autre but de l'invention est de proposer une nouvelle composition fongicide présentant une efficacité améliorée contre le mildiou et/ou l'oïdium et/ou le botrytis de la vigne.

Il a maintenant été trouvé que ces buts pouvaient être atteints en totalité ou en partie grâce aux compositions fongicides selon la présente invention.

La présente invention a donc pour objet en premier lieu des compositions fongicides comprenant :

a) au moins un dérivé de pyridylméthylbenzamide de formule (1) :

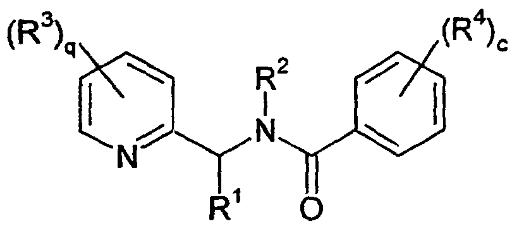

(I)

dans laquelle :

- $R^1$ est choisi parmi l'atome d'hydrogène, un radical alkyle éventuellement substitué et un radical acyle éventuellement substitué;
- $R^2$ est choisi parmi l'atome d'hydrogène et un radical alkyle éventuellement substitué ;
- $R^3$ et $R^4$, identiques ou différents, sont indépendamment choisis parmi un atome d'halogène, le radical hydroxy, le radical cyano, le radical nitro, le radical $-SF_5$, le radical trialkylsilyle, un radical amino éventuellement substitué, un radical acyle, et un groupement E, OE ou SE, dans lequel E est choisi parmi un radical alkyle, alkényle, alkynyle, cycloalkyle, cycloalkényle, aryle et hétérocyclyle, chacun d'eux pouvant être éventuellement substitué ;
- c représente 0, 1,2,3 ou 4 ;
- q représente 0, 1, 2, 3 ou 4 ;

ainsi que leurs éventuels isomères optiques et/ou géométriques, tautomères et sels d'addition à un acide ou une base, acceptables dans le domaine de l'agriculture ;
et

b) au moins un composé (II) qui est le propamocarbe.

Dans les définitions des composés de formule (I) exposés ci-dessus, les différents radicaux et termes chimiques employés ont, sauf précision contraire, les significations suivantes :

- "alkyle" ou alkyl-" désigne un radical hydrocarboné saturé, linéaire ou ramifié, contenant de 1 à 6 atomes de carbone ;
- "alkényle" désigne un radical hydrocarboné, linéaire ou ramifié, contenant de 1 à 6 atomes de carbone et une insaturation sous forme de double liaison ;
- "alkynyle" désigne un radical hydrocarboné, linéaire ou ramifié, contenant de 1 à 6 atomes de carbone et une insaturation sous forme de triple liaison ;
- "alkoxy" désigne un radical alkyl-oxy ;
- "acyl" désigne le radical formyle ou un radical alkoxycarbonyle ;
- "cycloalkyle" désigne un radical hydrocarboné cyclique saturé, contenant de 3 à 8 atomes de carbone ;
- "aryle" désigne un radical phényle ou naphtyle ;
- "hétérocyclyle" désigne un radical cyclique, insaturé ou totalement ou partiellement saturé, conteant de 3 à 8 atomes, choisis parmi carbone, azote, soufre et oxygène, par exemple et de manière non limitative, pyridyle, pyridinyle, quinolyle, furyle, thiényle, pyrrolyle, oxazolinyle ;
- le terme "éventuellement substitué" signifie que les radicaux ainsi qualifiés peuvent être substitués par un ou plusieurs radicaux choisis parmi chlore, brome, fluor, iode, alkyle, alkoxy, hydroxy, nitro, amino; cyano et acyle.

Les composés de formule (I) sont par exemple décrits dans la demande de brevet EP-A-1 056 723 et, parmi ceux-ci, on préférera les composés possédant l'une des caractéristiques suivantes, prises isolément ou en combinaison :

- $R^1$ et $R^2$, identiques ou différents, sont indépendamment choisis parmi l'atome d'hydrogène et un radical alkyle éventuellement substitué ;
- $R^3$ et $R^4$, identiques ou différents, sont indépendamment choisis parmi un atome d'halogène, le radical hydroxy, le radical nitro, un radical amino éventuellement substitué, un radical acyle, et un groupement E, OE ou SE, dans lequel E est choisi parmi un radical alkyle, cycloalkyle, phényle et hétérocyclyle, chacun d'eux pouvant être éventuellement substitué ;
- c représente 0, 1, 2 ou 3 ;
- q représente 0,1,2 ou 3 ;

ainsi que leurs éventuels isomères optiques et/ou géométriques, tautomères et sels d'addition à un acide ou une base, acceptables dans le domaine de l'agriculture.

Parmi les composés de formule (I), on préférera encore les composés possédant les caractéristiques suivantes, prises isolément ou en combinaison :

- $R^1$ et $R^2$, identiques ou différents, sont indépendamment choisis parmi l'atome d'hydrogène et un radical méthyle ou éthyle ;
- $R^3$ et $R^4$, identiques ou différents, sont indépendamment choisis parmi un atome d'halogène, le radical nitro, un radical amino éventuellement substitué et un radical alkyle, cycloalkyle, phényle ou hétérocyclyle, chacun d'eux pouvant être éventuellement substitué ;
- c représente 1 ou 2 ;
- q représente 1 ou 2 ;

ainsi que leurs éventuels isomères optiques et/ou géométriques, tautomères et sels d'addition à un acide ou une base, acceptables dans le domaine de l'agriculture.

Plus particulièrement, les composés de formule (I) possèdent les caractéristiques suivantes :

- $R^1$ et $R^2$ représentent chacun l'atome d'hydrogène ;
- $R^3$ et $R^4$, identiques ou différents, sont indépendamment choisis parmi un atome d'halogène, le radical nitro, un radical alkyle et le radical trifluorométhyle ;

- c et q représentent indépendamment l'un de l'autre 2 ;

ainsi que leurs éventuels tautomères et sels d'addition à un acide ou une base, acceptables dans le domaine de l'agriculture.

À titre d'exemple, les composés de formule (I) suivants sont tout particulièrement préférés dans le cadre de la présente invention :

- **Composé (Ia)** : 2,6-dichloro-*N*-{[3-chloro-5-(trifluorométhyl)-2-pyridinyl] méthyl}benzamide ;
- **Composé (Ib):** *N*-{[3-chloro-5-(trifluorométhyl)-2-pyridinyl]méthyl}-2-fluoro-6-nitrobenzamide ;
- **Composé (Ic)** : *N*-{[3-chloro-5-(trifluorométhyl)-2-pyridinyl]méthyl}-2-méthyl-6-nitrobenzamide ;

ainsi que leurs éventuels tautomères et sels d'addition à un acide ou une base, acceptables dans le domaine de l'agriculture.

Le composé (II) défini ci-dessus est le propamocarbe, c'est-à-dire le 3-(diméthylamino)propylcarbarmate de propyle, décrit par exemple dans "The Pesticide Manual", 11$^{th}$ edition, C D S Tomlin, British Crop Protection Council, pages 1015-1017, n° 599. De manière avantageuse, le propamocarbe utilisé dans les compositions selon la présente invention sera sous forme de chlorhydrate, c'est-à-dire le sel d'addition du propamocarbe avec l'acide chlorhydrique, connu commercialement sous le nom de Prévicur®.

Le propamocarbe, utile pour les compositions selon la présente invention, peut également être utilisé sous forme de sel avec le fosétyl, comme décrit dans la demande de brevet EP-A-1 056 755, ou encore dans la demande de brevet WO-A-98/44801.

De façon avantageuse, les compositions selon la présente invention comprennent le composé (Ia) ou le composé (Ib) ou le composé (Ic) avec le composé (II). Les compositions préférées de la présente invention comprennent le composé (Ia) avec le composé (II).

Ainsi, la présente invention concerne des compositions fongicides comprenant au moins un dérivé de pyridylméthylbenzamide de formule (I), tel que défini précédemment et au moins un composé (II) tel que défini précédemment, le rapport composé (I)/composé (II) étant compris entre 1/500 et 1/1, de préférence entre 1/200 et 1/5, de préférence encore entre 1/150 et 1/10.

Le rapport composé (I)/composé (II) est défini comme étant le rapport en poids de ces 2 composés. Il en est de même pour tout rapport de 2 composés chimiques, ultérieurement mentionné dans le présent texte, dans la mesure où une définition différente de ce rapport n'est pas expressément indiquée.

Il est bien entendu que les dites compositions fongicides peuvent renfermer un seul composé (I) ou plus d'un tel composé et/ou un seul composé (II) ou plus d'un tel composé, ainsi qu'un ou plusieurs autres composés fongicides, herbicides, insecticides et/ou régulateurs de croissance des plantes, selon l'utilisation à laquelle elles sont destinées.

Ainsi les compositions fongicides selon la présente invention peuvent également comprendre, par exemple, une ou plusieurs autres matières actives fongicides choisies parmi l'acibenzolar-S-méthyl, l'azoxystrobine, le bénalaxyl, le bénomyl, la blasticidine-S, le bromuconazole, le captafol, le captane, le carbendazim, la carboxine, le carpropamide, le chlorothalonil, les compositions fongicides à base de cuivre, les dérivés du cuivre tels que l'hydroxyde de cuivre et l'oxychlorure de cuivre, la cyazofamide, le cymoxanil, le cyproconazole, le cyprodinyl, le dichloran, le diclocymet, le diethofencarb, le difénoconazole, le diflumétorim, le diméthomorphe, le diniconazole, la discostrobine, le dodémorphe, la dodine, fédifenphos, l'époxyconazole, l'éthaboxam, l'éthirimol, la famoxadone, la fénamidone, le fénarimol, le fenbuconazole, le fenhexamide, le fenpiclonil, la fenpropidine, le fenpropimorphe, la ferimzone, le fluazinam, le fludioxonil, le flumétover, le fluquinconazole, le flusilazole, le flusulfamide, le flutolanil, le flutriafol, le folpel, le furalaxyl, le furametpyr, la guazatine, l'hexaconazole, l'hymexazol, l'imazalil, l'iprobenphos, l'iprodione, l'isoprothiolane, la kasugamycine, le krésoxim-méthyl, le mancozèbe, le manèbe, le méfénoxam, le mépanipyrim, le métalaxyl et ses formes énantiomériques telles que le métalaxyl-M, le metconazole, le métiram-zinc, la métominostrobine, l'oxadixyl, le péfurazoate, le penconazole, le pencycuron, l'acide phosphoreux et ses dérivés tels que le fosétyl-Al, le phtalide, la picoxystrobine, le probénazole, le prochloraz, la procymidone, le propiconazole, la pyraclostrabine, le pyriméthanil, le pyroquilon, le quinoxyfène, le silthiofam, le siméconazole, la spiroxamine, le tébuconazole, le tétraconazole, le thiabendazole, la thifluzamide, le thiophanate, par exemple le thiophanate-méthyl, le thiram, le triadiméfon, le triadiménol, le tricyclazole, le tridémorphe, la trifloxystrobine, le triticonazole, les dérivés de la valinamide tels que, par exemple, l'iprovalicarb, la vinclozoline, le zinèbe et la zoxamide.

L'invention a pour autre objet un procédé de lutte, à titre curatif ou préventif, contre les champignons phytopathogènes des cultures, caractérisé en ce que l'on applique sur le sol où poussent ou où sont susceptibles de pousser les végétaux, sur les feuilles et/ou les fruits des végétaux ou sur les semences des végétaux, une quantité efficace (agronomiquement efficace) et non phytotoxique d'une composition fongicide selon l'invention.

Les compositions selon l'invention sont avantageuses pour lutter contre les maladies fongiques de nombreuses cultures, comme par exemple les céréales, les légumes, les solanées, les cultures maraîchères, la vigne, les fruits

en général, et notamment contre les mildious, fontes des semis, septorioses, *Pythium sp.* de ces cultures.

Les compositions selon l'invention peuvent également être utilisées pour lutter contre d'autres maladies phytopathogènes des cultures bien connues de l'homme du métier qui a à sa disposition les composés de formule (I) et les composés (II).

Ces compositions améliorent généralement de façon notable les actions respectives et isolées du composé (I) et du composé (II) pour un certain nombre de champignons particulièrement nuisibles dans les cultures, notamment pour les solanées (tomates, pommes de terre, ...), plus particulièrement pour le mildiou de la pomme de terre et le mildiou de la tomate, tout en conservant une absence de phytotoxicité vis-à-vis de ces cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

Dans les compositions selon l'invention, le rapport composé (I)/composé (II) est avantageusement choisi de manière à produire un effet synergique. On entend par effet synergique notamment celui défini par Colby S.R., dans un article intitulé "Calcul des réponses synergiques et antagonistes des combinaisons herbicides", *Weeds,* (1967), ***15,*** pages. 20-22.

Ce dernier article utilise la formule :

$$E = X + Y - \frac{XY}{100}$$

dans laquelle E représente le pourcentage attendu d'inhibition de la maladie pour l'association des deux fongicides à des doses définies (par exemple égales respectivement à x et y), X est le pourcentage d'inhibition observé de la maladie par le composé (I) à une dose définie (égale à x), Y est le pourcentage d'inhibition observé de la maladie par le composé (II) à une dose définie (égale à y). Lorsque le pourcentage d'inhibition observé de l'association est plus grand que E, il y a effet synergique.

On entend également par effet synergique celui défini par l'application de la méthode de Tammes, "Isoboles, a graphie représentation of synergism in pesticides", *Netherlands Journal of Plant Pathology,* ***70***(1964), pages 73-80.

Les domaines de rapport composé (I)/composé (II) indiqués ci-dessus ne sont nullement limitatifs de la portée de l'invention, mais sont plutôt cités à titre indicatif, l'homme du métier étant tout à fait en mesure d'effectuer des essais complémentaires pour trouver d'autres valeurs du rapport de doses de ces deux composés, pour lesquels un effet synergique est observé.

Ainsi, les compositions selon l'invention, comprenant le composé (I) et le composé (II), permettent d'observer des propriétés synergiques tout à fait remarquables.

Selon une variante des compositions selon l'invention, le rapport composé (I)/composé (II) est avantageusement compris entre 1/200 et 1/5, de préférence entre 1/140 et 1/10.

L'invention comprend donc également les procédés de traitement des plantes contre les maladies phytopathogènes, caractérisés en ce que l'on applique une composition comprenant au moins un composé de formule (I) avec au moins un composé (II). On peut également appliquer une composition contenant les deux matières actives, ou bien, soit simultanément soit successivement de manière à avoir l'effet conjugué, deux compositions contenant chacune l'une des deux matières actives.

Ces compositions recouvrent non seulement les compositions prêtes à être appliquées sur la culture à traiter au moyen d'un dispositif adapté, tel qu'un dispositif de pulvérisation, mais également les compositions concentrées commerciales qui doivent être diluées avant application sur la culture.

La présente invention fournit une méthode de lutte contre une grande variété de maladies phytopathogènes de cultures, notamment contre les septorioses et les mildious. La lutte contre ces maladies peut être réalisée par application foliaire directe.

La présente invention fournit donc un procédé de lutte, à titre curatif ou préventif, contre les maladies phytopathogènes des cultures, qui comprend le traitement de la dite culture (par exemple par application ou par administration) avec une quantité efficace et non phytotoxique d'une association telle que définie précédemment. Par traitement de la culture, on entend une application ou administration d'une composition fongicide telle que décrite précédemment sur les parties aériennes des cultures ou sur le sol où elles poussent et qui sont infestées ou susceptibles d'être infestées par une maladie phytopathogène, telle que le mildiou ou la septoriose, par exemple. Par traitement de la culture, on entend également le traitement des produits de reproduction de la culture, tels que les semences ou les tubercules par exemple.

Les compositions décrites ci-après sont utilisées en général pour application à des végétaux en croissance, ou à des lieux où l'on fait pousser des cultures, ou à l'enrobage ou au pelliculage des semences.

Parmi les moyens appropriés pour appliquer les compositions selon l'invention, on peut citer, l'utilisation de poudres, de pulvérisations foliaires, de granulés, de brouillards ou de mousses, ou encore sous forme de suspensions de compositions finement divisées ou encapsulées ; pour les traitements des sols ou des racines par des imbibitions

liquides, des poudres, des granulés, des fumées ou des mousses ; pour l'application aux semences des plantes, l'utilisation, comme agents de pelliculage ou d'enrobage des semences, de poudres ou de bouillies liquides.

Les compositions selon l'invention sont, de manière appropriée, appliqués à la végétation et en particulier aux feuilles infestées par les champignons phytopathogènes. Une autre méthode d'application des composés ou des compositions selon l'invention est l'addition d'une formulation contenant les matières actives, à l'eau d'irrigation. Cette irrigation peut être une irrigation au moyen d'arroseurs.

Les formulations convenables pour les applications des compositions selon l'invention comprennent les formulations convenables pour être utilisées sous forme de, par exemple, sprays, poudres, granulés, brouillards, mousses, émulsions ou autres.

Dans la pratique, pour la lutte contre les maladies phytopathogènes des cultures, une méthode, par exemple, consiste à appliquer aux plantes ou au milieu dans lequel elles poussent une quantité efficace d'une composition selon l'invention. Pour une telle méthode, les matières actives sont généralement appliquées sur le lieu même où l'infestation doit être contrôlée, et ce à une dose d'efficacité comprise entre environ 1 g et environ 1000 g de matières actives, au total, par hectare de lieu traité. Dans des conditions idéales, selon la nature du champignon phytopathogène à traiter, une dose plus faible peut offrir une protection adéquate. Inversement, de mauvaises conditions climatiques, des résistances ou d'autres facteurs peuvent requérir des doses de matière active plus élevées.

Les doses d'utilisation efficaces des associations employées dans l'invention peuvent varier dans de grandes proportions, en particulier selon la nature des champignons phytopathogènes à éliminer ou le degré d'infestation, par exemple, des plantes par ces champignons.

La dose optimale dépend habituellement de plusieurs facteurs, par exemple du type de champignon phytopathogène à traiter, du type ou du niveau de développement de la plante infestée, de la densité de végétation, ou encore de la méthode d'application. Plus préférentiellement une dose efficace de matières actives (I) et (II) est comprise entre environ 5 g/ha et environ 700 g/ha.

Pour leur emploi dans la pratique, les compositions selon l'invention peuvent être utilisées seules et peuvent aussi avantageusement être utilisées dans des formulations contenant l'une ou l'autre des matières actives ou encore les deux ensembles, en combinaison ou association avec un ou plusieurs autres composants compatibles qui sont par exemple des charges ou des diluants solides ou liquides, des adjuvants, des tensioactifs, ou équivalents, appropriés pour l'utilisation souhaitée et qui sont acceptables pour des usages en agriculture. Les formulations peuvent être de tout type connu dans le domaine et convenables pour l'application dans tous types de plantations ou de cultures. Ces formulations qui peuvent être préparées de toute manière connue dans ce domaine, font de même partie de l'invention.

Les formulations peuvent aussi contenir d'autres types d'ingrédients tels que des colloïdes protecteurs, des adhésifs, des épaississants, des agents thixotropes, des agents de pénétration, des huiles à pulvériser, des stabilisants, des conservateurs (en particulier des agents anti-moisissures), des agents séquestrants, ou autres, ainsi que d'autres ingrédients actifs connus possédant des propriétés pesticides (en particulier fongicides, insecticides, acaricides, nématicides) ou possédant des propriétés de régulateur de croissance des plantes. Plus généralement, les composés utilisés dans l'invention peuvent être combinés avec tous additifs solides ou liquides correspondants aux techniques de formulations usuelles.

En général, les formulations selon l'invention contiennent habituellement d'environ 0,05% à environ 99% (en poids) d'une ou plusieurs compositions selon l'invention, d'environ 1% à environ 95% d'une ou plusieurs charges solides ou liquides, et éventuellement, d'environ 0,1% à environ 50% d'un ou plusieurs autres composés compatibles, tels que des tensioactifs ou autres.

Dans le présent exposé, le terme "charge" signifie un composant organique ou inorganique, naturel ou synthétique, avec lequel les composants actifs sont combinés pour faciliter son application, par exemple, aux plantes, aux semences, ou au sol. Cette charge est par conséquent généralement inerte et elle doit être acceptable (par exemple acceptable pour des usages agronomiques, en particulier pour traiter les plantes).

La charge peut être solide, par exemple, argiles, silicates naturels ou synthétiques, silice, résines, cires, fertilisants solides (par exemple sels d'ammonium), minéraux naturels du sol, tels que kaolins, argiles, talc, chaux, quartz, attapulgite, montmorillonite, bentonite ou terres à diatomées, ou minéraux synthétiques, tels que silice, alumine, ou silicates, en particulier silicates d'aluminium ou de magnésium. Les charges solides convenables pour les granulés sont les suivantes : roches naturelles, pilées ou concassées, telles que calcite, marbre, pierre ponce, sépiolite, et dolomite ; granulés synthétiques de farines inorganiques ou organiques ; granulés de matériau organique tel que sciure, écorce de noix de coco, épi ou enveloppe de maïs ou tige de tabac, kieselguhr, phosphate tricalcique, liège en poudre, ou noir de carbone adsorbant ; polymères solubles dans l'eau, résines, cires ; ou fertilisants solides. De telles compositions peuvent, si on le désire, contenir un ou plusieurs agents compatibles comme les agents mouillants, dispersants, émulsifiants ou colorants qui lorsqu'ils sont solides peuvent aussi servir de diluants.

Les charges peuvent aussi être liquides, par exemple : eau, alcools, en particulier butanol ou glycol, ainsi que leurs éthers ou esters, en particulier l'acétate de méthylglycol ; cétones, en particulier acétone, cyclohexanone, méthyléthylcétone, méthylisobutylcétone ou isophorone ; coupes de pétrole telles que hydrocarbures parafiniques ou

aromatiques, en particulier xylènes ou alkylnaphtalènes ; huiles minérales ou végétales; hydrocarbures aliphatiques chlorés, en particulier trichloroéthane ou chlorure de méthylène; hydrocarbures aromatiques chlorés, en particulier chlorobenzènes ; solvants solubles dans l'eau ou fortement polaires tels que diméthylformamide, diméthylsulfoxyde, N,N-diméthylacétamide, N-méthylpyrro-lidone ; N-octylpyrrolidone, gaz liquéfiés ; ou autres, qu'ils soient pris séparément ou en mélange.

L'agent tensioactif peut être un agent émulsifiant, un agent dispersant, ou un agent mouillant, de type ionique ou non ionique ou un mélange de ces agents tensioactifs. Parmi ceux-ci, on utilise par exemple des sels d'acides polyacryliques, des sels d'acides lignosulfoniques, des sels d'acides phénolsulfoniques ou naphtalènesulfoniques, des polycondensats d'oxyde d'éthylène avec des alcools gras ou des acides gras ou des esters gras ou des amines grasses, des phénols substitués (en particulier des alkylphénols ou des arylphénols), des esters-sels de l'acide sulfosuccinique, des dérivés de la taurine (en particulier des alkyltaurates), des esters phosphoriques d'alcools ou de polycondensats d'oxyde d'éthylène avec des phénols, des esters d'acides gras avec des polyols, ou des dérivés fonctionnels sulfates, sulfonates ou phosphates des composés décrits ci-dessus. La présence d'au moins un agent tensioactif est généralement essentielle lorsque les matières actives et/ou la charge inerte sont seulement peu solubles ou non solubles dans l'eau et lorsque la charge de la dite composition à appliquer est de l'eau.

Les formulations selon l'invention peuvent de plus contenir d'autres additifs tels que des adhésifs ou des colorants. Des adhésifs tels que la carboxyméthyl-cellulose, ou des polymères synthétiques ou naturels sous forme de poudres, granulés ou matrices, tels que gomme arabique, latex, polyvinylpyrrolidone, alcool polyvinylique ou acétate de polyvinyle, des phospholipides naturels, tels que céphalines ou lécithines, ou des phospholipides synthétiques peuvent être utilisés dans les formulations. Il est possible d'utiliser des colorants tels que des pigments inorganiques, tels que par exemple : oxydes de fer, oxydes de titane, ou Bleu de Prusse ; matières colorantes organiques, telles que celles du type alizarines, azoïques, ou phtalocyanines métalliques ; ou des oligo-éléments tels que sels de fer, manganèse, bore, cuivre, cobalt, molybdène ou zinc.

Les formulations contenant les compositions de l'invention, qui sont employées pour lutter contre les champignons phytopathogènes des cultures, peuvent aussi contenir des stabilisants, d'autres agents fongicides, des insecticides, acaricides, nématicides, anti-helminthes ou anti-coccidoses, des bactéricides, des agents attractants ou répulsifs ou des phéromones pour les arthropodes ou les vertébrés, des désodorisants, des arômes, ou des colorants.

Ceux-ci peuvent être choisis à dessein pour améliorer la puissance, la persistance, la sécurité, le spectre d'action sur les champignons phytopathogènes des cultures ou pour rendre la composition capable d'accomplir d'autres fonctions utiles pour les surfaces traitées.

Pour leur emploi en agriculture, les compositions selon l'invention, sont par conséquent formulées sous des formes solides ou liquides variées.

Comme formulations solides, on peut citer les poudres pour poudrage (à teneur en matières actives pouvant aller jusqu'à 100 %) et les granulés, notamment ceux obtenus par extrusion, atomisation, compactage, imprégnation d'un support granulé, granulation à partir d'une poudre (la teneur en matières actives dans ces granulés étant entre 0,5 et 80% pour ces derniers cas).

Les compositions fongicides selon l'invention peuvent encore être utilisées sous forme de poudres pour poudrage ; on peut aussi utiliser des formulations comprenant 50 g de matières actives et 950 g de talc; on peut aussi utiliser des formulations comprenant 20 g de matières actives, 10g de silice finement divisée et 970 g de talc ; on mélange et broie ces constituants et on applique le mélange par poudrage.

Comme formulations liquides ou destinées à constituer des compositions liquides lors de l'application, on peut citer les solutions, en particulier les concentrés solubles dans l'eau, les concentrés émulsionnables, les émulsions, les suspensions concentrées, les poudres mouillables (ou poudre à pulvériser).

Les suspensions concentrées, applicables en pulvérisation, sont préparées de manière à obtenir un produit fluide stable ne se déposant pas et conduisant à une bonne bio-disponibilité des matières actives. Ces suspensions contiennent habituellement de 5 % à 75 % de matières actives, de préférence de 10 % à 25 %, de 0,5 à 75 % d'agents tensioactifs, de préférence de 5 % à 50 %, de 0 à 10 % d'additifs appropriés, comme des agents épaississants d'origine organique ou minérale, des agents anti-mousses, des inhibiteurs de corrosion, des adhésifs, des conservateurs, comme par exemple le Proxel GXL®, des antigels et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau. Dans certains cas, et notamment pour les formulations destinées au traitement de semences, un ou plusieurs colorants pourront être ajoutés.

Pour les applications foliaires, le choix des tensioactifs est primordial pour assurer une bonne bio disponibilité des matières actives ; ainsi, on utilisera de préférence une combinaison d'un tensioactif à caractère hydrophile (HLB $> 10$) et d'un tensioactif à caractère lipophile (HLB $< 5$). De telles combinaisons d'agents tensioactifs sont par exemples décrites dans la demande de brevet français non encore publiée n° 00 04015.

À titre d'exemple, voici 3 formulations possibles de type suspension concentrée, adaptées à différentes cultures :

**Exemple SC 1** (en g/kg):

Cet exemple est plutôt adapté aux cultures monocotylédones (céréales, riz,......)

- matières actives 150
- tensioactif à caractère hydrophile (par exemple Rhodasurf 860P) 300
- tensioactif à caractère lipophile (par exemple Plurafac LF 700) 150
- phosphate de tristyrylphénol éthoxylé 50
- antimousse 5
- propylène glycol 30
- aérosil 200 20
- attagel 50 40
- eau (q.s.p. 1 kg) 255

**Exemple SC2** (en g/kg)

Cet exemple est plutôt adapté aux cultures dicotylédones (vigne, arbre fruitier......)

- matières actives 150
- tensioactif à caractère hydrophile (par exemple Rhodasurf 860P) 150
- phosphate de tristyrylphénol éthoxylé 50
- antimousse 5
- propylène glycol 30
- aérosil 200 20
- attagel 50 40
- eau (q.s.p. 1 kg) 555

**Exemple SC3 (en g/kg)**

Cet exemple est plus spécifiquement adapté au traitement de semences.

- matières actives 50
- tensioactif à caractère hydrophile (par exemple Rhodasurf 860P) 5
- phosphate de tristyrylphénol éthoxylé 15
- antimousse 1
- propylène glycol 30
- colorant 20
- rhodopol G 1,5
- proxel GXL 1,5
- eau (q.s.p. 1 kg) 876

Pour réaliser ces formulations, on utilisera de préférence le mode opératoire suivant :
À la quantité d'eau nécessaire, au moyen d'un agitateur à turbine, on mélange les tensioactifs sélectionnés (tensioactif à caractère hydrophile + tensioactif à caractère lipophile + phosphate de tristylphénol éthoxylé); après homogénéisation, on mélange ensuite les autres constituants de la formule en dehors des matières actives.
On ajoute ensuite les matières actives et éventuellement l'épaississant d'origine minérale (aérosil 200 et attagel 50) afin d'obtenir un milieu de consistance visqueuse. Le mélange obtenu est ensuite broyé au moyen d'une turbine broyeuse à grande vitesse puis d'un broyeur à billes jusqu' à obtenir un D50 de l'ordre de 1 à 3 µm et un D90 compris entre 3 et 8 µm.
Dans le cas ou on n'a pas utilisé d'épaississant d'origine minérale, on rajoute ensuite l'épaississant d'origine naturelle (Rhodopol G) et on agite jusqu'à obtenir une viscosité adéquate.
Les poudres mouillables (ou poudre à pulvériser) sont habituellement préparées de telle sorte qu'elles contiennent de 20 % à 95 % de matières actives, et elles contiennent habituellement, en plus du support solide, de 0 % à 30 % d'un agent mouillant, de 3 % à 20 % d'un agent dispersant, et, quand c'est nécessaire, de 0,1% à 10 % d'un ou plusieurs stabilisants et/ou autres additifs, comme des agents de pénétration, des adhésifs, ou des agents antimottants, colorants, etc...
Pour obtenir les poudres à pulvériser ou poudres mouillables, on mélange intimement les matières actives dans les mélangeurs appropriés avec les substances additionnelles et on broie avec des moulins ou autres broyeurs

appropriés. On obtient des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application par exemple sur les feuilles des végétaux ou sur les semences.

A titre d'exemple, voici diverses compositions de poudres mouillables (ou poudres à pulvériser) :

**Exemple PM 1**

- matières actives 50%
- alcool gras éthoxylé (agent mouillant) 2,5%
- phényléthylphénol éthoxylé (agent dispersant) 5%
- craie (support inerte) 42,5%

**Exemple PM 2 :**

- matières actives 10%
- alcool synthétique oxo de type ramifié, en C13 éthoxylé par 8 à 10 oxyde d'éthylène (agent mouillant) 0,75%
- lignosulfonate de calcium neutre (agent dispersant) 12%
- carbonate de calcium (charge inerte) q.s.p. 100 %

**Exemple PM 3 :**

Cette poudre mouillable contient les mêmes ingrédients que dans l'exemple précédent, dans les proportions ci-après :

- matières actives 75%
- agent mouillant 1,50%
- agent dispersant 8%
- carbonate de calcium (charge inerte) q.s.p. 100%

**Exemple PM 4 :**

- matières actives 90%
- alcool gras éthoxylé (agent mouillant) 4%
- phényléthylphénol éthoxylé (agent dispersant) 6%

**Exemple PM 5 :**

- matières actives 50%
- mélange de tensio-actifs anioniques et non ioniques (agent mouillant) 2,5%
- lignosulfonate de sodium (agent dispersant) 5%
- argile kaolinique (support inerte) 42,5%

Les dispersions et émulsions aqueuses, par exemple les compositions obtenues en diluant à l'aide d'eau une poudre mouillable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les compositions fongicides selon l'invention peuvent être formulées sous la forme de granulés dispersables dans l'eau également compris dans le cadre de l'invention. Ces granulés dispersables, de densité apparente généralement comprise entre environ 0,3 et 0,6 ont une dimension de particules généralement comprise entre environ 150 et 2000 et de préférence entre 300 et 1500 microns.

La teneur en matières actives de ces granulés est généralement comprise entre environ 1% et 90%, et de préférence entre 25% et 90%. Le reste du granulé est essentiellement composé d'une change solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale ou, de préférence, organique. On a obtenu d'excellents résultats avec l'urée. Dans le cas d'une charge insoluble, celle-ci est de préférence minérale, comme par exemple le kaolin ou la bentonite. Elle est alors avantageusement accompagnée d'agents tensio-actifs (à raison de 2 à 20% en poids du granulé) dont plus de la moitié est, par exemple, constituée par au moins un agent dispersant, essentiellement anionique, tel qu'un polynaphtalène sulfonate alcalin ou alcalino terreux ou un lignosulfonate alcalin ou alcalino-terreux, le reste étant constitué par des mouillants non ioniques ou anioniques tel qu'un alcoyle naphtalène sulfonate alcalin ou alcalino-terreux. Par ailleurs, bien que cela ne soit pas indispensable, on peut ajouter d'autres adjuvants tels que des agents anti-mousse.

Le granulé peut être préparé par mélange des ingrédients nécessaires puis granulation selon plusieurs techniques en soi connues (drageoir, lit fluide, atomiseur, extrusion, etc...). On termine généralement par un concassage suivi d'un tamisage à la dimension de particule choisie dans les limites mentionnées ci-dessus. On peut encore utiliser des granulés obtenus comme précédemment puis imprégnés avec une composition contenant les matières actives.

De préférence, il est obtenu par extrusion, en opérant comme indiqué dans les exemples ci-après.

**Exemple GD1 :** Granulés dispersables

Dans un mélangeur, on mélange 90 % en poids des matières actives et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

**Exemple GD2 :** Granulés dispersables

Dans un mélangeur, on mélange les constituants suivants :

- matières actives 75%
- agent mouillant (alkylnaphtalène sulfonate de sodium) 2%
- agent dispersant (polynaphtalène sulfonate de sodium) 8%
- charge inerte insoluble dans l'eau (kaolin) 15%

Ce mélange est granulé en lit fluide, en présence d'eau, puis séché, concassé et tamisé de manière à obtenir des granulés de dimension comprise entre 0,15 et 0,80 mm.

Ces granulés peuvent être utilisés seuls, en solution ou dispersion dans de l'eau de manière à obtenir la dose cherchée. Ils peuvent aussi être utilisés pour préparer des compositions avec d'autres matières actives, notamment fongicides, ces dernières étant sous la forme de poudres mouillables, ou de granulés ou suspensions aqueuses.

Les compositions fongicides selon l'invention contiennent habituellement de 0,5 à 95 % de la combinaison du composé (I) et du composé (II). Il peut s'agir de la composition concentrée c'est-à-dire du produit commercial associant le composé (I) et le composé (II). Il peut s'agir également de la composition diluée prête à être appliquée sur les cultures à traiter. Dans ce dernier cas la dilution à l'eau peut être effectuée soit à partir d'une composition concentrée commerciale renfermant le composé (I) et le composé (II) (ce mélange est appelé "prêt-à-l'emploi" ou encore "ready mix", en langue anglaise), soit au moyen du mélange extemporané (appelé en anglais "tank mix") de deux compositions concentrées commerciales renfermant chacune le composé (I) et le composé (II).

L'invention a enfin pour objet un procédé de lutte, à titre curatif ou préventif, contre les champignons phytopathogènes des cultures, caractérisé en ce que l'on applique aux végétaux à traiter une quantité efficace et non phytotoxique d'une composition fongicide selon l'invention.

Les champignons phytopathogènes des cultures qui peuvent être combattus par ce procédé sont notamment ceux :

- du groupe des oomycètes :

  - du genre Phytophthora tel que *Phytophthora infestans* (mildiou des solanées, notamment de la pomme de terre ou de la tomate),
  - de la famille des Péronosporacées, notamment *Plasmopara viticola* (mildiou de la vigne), *Plasmopara halstedii*

(mildiou du tournesol), *Pseudoperonospora sp* (notamment mildiou des cucurbitacées et du houblon), *Bremia lactucae* (mildiou de la laitue), *Peronospora tabacinae* (mildiou du tabac), *Peronospora parasitica* (mildiou du chou), *Peronospora viciae* (mildiou du pois), *Peronospora destructor* (mildiou de l'oignon) ;

- du groupe des adélomycètes :
    - du genre Alternaria, par exemple *Alternaria solani* (alternariose des solanées, et notamment de la tomate et des pommes de terre ),
    - du genre Guignardia, notamment *Guignardia bidwelli* (black rot de la vigne),
    - du genre Oïdium, par exemple oïdium de la vigne *(Uncinula necator*), oïdium des cultures légumières, par exemple *Erysiphe polygoni* (oïdium des crucifères), *Leveillula taurica, Erysiphe cichoracearum*, *Sphaerotheca fuligena*, (oïdium des cucurbitacées, des composées, de la tomate), *Erysiphe communis* (oïdium de la betterave et du chou), *Erysiphe pisi* (oïdium du pois, de la luzerne), *Erysiphe polyphaga* (oïdium du haricot et du concombre), *Erysiphe umbelliferarum* (oïdium des ombellifères, notamment de la carotte), *Sphaerotheca humuli* (oïdium du houblon) ;
- du groupe des champignons du sol :
    - du genre Pythium sp.,
    - du genre Aphanomyces sp., notamment *Aphanomyces euteiches* (pourridie du pois), *Aphanomyces cochlioides* (pourriture noire de la betterave).

Par l'expression "on applique aux végétaux à traiter", on entend signifier, au sens du présent texte, que les compositions fongicides objets de l'invention peuvent être appliquées au moyen de différents procédés de traitement tels que :

- la pulvérisation sur les parties aériennes des dits végétaux d'un liquide comprenant une des dites compositions,
- le poudrage, l'incorporation au sol de granulés ou de poudres, l'arrosage, autour des dits végétaux, et dans le cas des arbres l'injection ou le badigeonnage,
- l'enrobage ou le pelliculage des semences des dits végétaux à l'aide d'une bouillie comprenant une des dites compositions.

La pulvérisation d'un liquide sur les parties aériennes des cultures à traiter est le procédé de traitement préféré.
Les exemples suivants sont donnés à titre purement illustratifs de l'invention et ne la limitent en aucune façon.
Bien que l'invention ait été décrite en termes de nombreuses variantes préférées, l'homme du métier appréciera que de nombreuses modifications, substitutions, omissions et changements peuvent être faits sans se départir de l'esprit de celle-ci. Ainsi, il est bien entendu que la portée de la présente invention est limitée uniquement par la portée des revendications suivantes, ainsi que par leurs équivalents.

**<u>Exemple</u>** <u>: Essai d'une composition contre le mildiou de la pomme de terre (*Phytophthora infestans* ; action préventive)</u>

On utilise pour ce test les matières actives suivantes :

- Composé (Ia) sous forme de suspension concentrée (10 SC)
- Composé [II] : chlorhydrate de propamocarbe (Prévicur-N®, sous forme de concentré soluble (66,5 SL).

Des plants de pommes de terre (âgés de trois semaines) sont traitées par pulvérisation automatique (Mardrive) à la dose de 200 1/ha. Six tests identiques sont effectués. Les composés (Ia) et (II) sont mélangés ("tank-mix") en différentes proportions exprimées, dans le tableau des résultats en g/ha.
Tous les plants sont inoculés 24 heures après le traitement avec une suspension de sporanges de <u>*Phytophthora infestans*</u>, à raison de 20 000 spores par ml.
Les plants inoculés sont couverts pendant 2 jours puis mis sous atmosphère contrôlée à 20°C, jusqu'à la lecture des résultats.
Le degré d'infestation est évalué par notation sur une échelle allant de 1 à 10, la valeur 0 dénotant l'absence de maladie, la valeur 100 dénotant une infestation totale (de 100 %).
Pour chaque traitement, le pourcentage de contrôle de la maladie est calculé par rapport à des plants non traités, et les résultats théoriques sont calculés grâce à la formule de Colby décrite précédemment.
La différence entre les résultats expérimentaux et les résultats calculés permet de déterminer le degré de synergie

entre les deux composés.

Les résultats sont présentés dans le tableau suivant :

*Essai sur composé (Ia) et composé (II) :*

| | | Concentration (g/ha) | Notation | Efficacité % | Synergie (Colby) |
|---|---|---|---|---|---|
| Composé (Ia) | | 5 | 4,3 | 48 | - |
| | | 25 | 3,3 | 60 | - |
| Composé (II) | | 400 | 8,3 | 0 | - |
| | | 600 | 6,8 | 18 | - |
| (Ia) + (II) | 1/80 | 5 + 400 | 2,8 | 66 | 18 |
| (Ia) + (II) | 1/120 | 5 + 600 | 2,2 | 74 | 17 |
| (Ia) + (II) | 1/16 | 25 + 400 | 1,5 | 82 | 22 |
| (Ia) + (II) | 1/24 | 25 + 600 | 1,0 | 88 | 21 |

**Témoin non traité : Notation 8,3**

Les compositions selon l'invention comprenant le composé (Ia) et le composé (II) présentent une forte synergie, quelles que soient les doses de chacune des matières actives et quels que soient les proportions composé (Ia)/composé (II).

## Revendications

**1.** Compositions fongicides comprenant :

a) au moins un dérivé de pyridylméthylbenzamide de formule (I) :

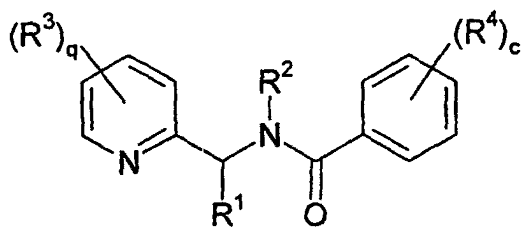

(I)

dans laquelle :

- $R^1$ est choisi parmi l'atome d'hydrogène, un radical alkyle éventuellement substitué et un radical acyle éventuellement substitué ;
- $R^2$ est choisi parmi l'atome d'hydrogène et un radical alkyle éventuellement substitué ;
- $R^3$ et $R^4$, identiques ou différents, sont indépendamment choisis parmi un atome d'halogène, le radical hydroxy, le radical cyano, le radical nitro, le radical $-SF_5$, le radical trialkylsilyle, un radical amino éventuellement substitué, un radical acyle, et un groupement E, OE ou SE, dans lequel E est choisi parmi un radical alkyle, alkényle, alkynyle, cycloalkyle, cycloalkényle, aryle et hétérocyclyle, chacun d'eux pouvant être éventuellement substitué ;

- c représente 0,1,2, 3 ou 4 ;
- q représente 0, 1, 2, 3 ou 4 ;

ainsi que leurs éventuels isomères optiques et/ou géométriques, tautomères et sels d'addition à un acide ou une base, acceptables dans le domaine de l'agriculture ; et

b) au moins un composé (II) qui est le propamocarbe.

**2.** Compositions fongicides selon la revendication 1, **caractérisées en ce que** le composé (I) possède est l'une des caractéristiques suivantes, prises isolément ou en combinaison :

- $R^1$ et $R^2$, identiques ou différents, sont indépendamment choisis parmi l'atome d'hydrogène et un radical alkyle éventuellement substitué ;
- $R^3$ et $R^4$, identiques ou différents, sont indépendamment choisis parmi un atome d'halogène, le radical hydroxy, le radical nitro, un radical amino éventuellement substitué, un radical acyle, et un groupement E, OE ou SE, dans lequel E est choisi parmi un radical alkyle, cycloalkyle, phényle et hétérocyclyle, chacun d'eux pouvant être éventuellement substitué ;
- c représente 0, 1,2 ou 3 ;
- q représente 0,1,2 ou 3 ;

ainsi que leurs éventuels isomères optiques et/ou géométriques, tautomères et sels d'addition à un acide ou une base, acceptables dans le domaine de l'agriculture.

**3.** Compositions fongicides selon la revendication 1, **caractérisées en ce que** le composé (I) possède est l'une des caractéristiques suivantes, prises isolément ou en combinaison :

- $R^1$ et $R^2$, identiques ou différents, sont indépendamment choisis parmi l'atome d'hydrogène et un radical méthyle ou éthyle ;
- $R^3$ et $R^4$, identiques ou différents, sont indépendamment choisis parmi un atome d'halogène, le radical nitro, un radical amino éventuellement substitué et un radical alkyle, cycloalkyle, phényle ou hétérocyclyle, chacun d'eux pouvant être éventuellement substitué ;
- c représente 1 ou 2 ;
- q représente 1 ou 2 ;

ainsi que leurs éventuels isomères optiques et/ou géométriques, tautomères et sels d'addition à un acide ou une base, acceptables dans le domaine de l'agriculture.

**4.** Compositions fongicides selon la revendication 1, **caractérisées en ce que** le composé (I) possède est l'une des caractéristiques suivantes :

- $R^1$ et $R^2$ représentent chacun l'atome d'hydrogène ;
- $R^3$ et $R^4$, identiques ou différents, sont indépendamment choisis parmi un atome d'halogène, le radical nitro, un radical alkyle et le radical trifluorométhyle ;
- c et q représentent indépendamment l'un de l'autre 2 ;

ainsi que leurs éventuels isomères optiques et/ou géométriques, tautomères et sels d'addition à un acide ou une base, acceptables dans le domaine de l'agriculture.

**5.** Compositions fongicides selon la revendication 1, **caractérisées en ce que** le composé de formule (I) est choisi parmi :

- la 2,6-dichloro-*N*-{[3-chloro-5-(trifluorométhyl)-2-pyridinyl] méthyl}benzamide,
- la *N*-{[3-chloro-5-(trifluorométhyl)-2-pyridinyl]méthyl}-2-fluoro-6-nitrobenzamide, et
- la *N*-{[3-chloro-5-(trifluorométhyl)-2-pyridinyl]méthyl)-2-méthyl-6-nitrobenzamide,

ainsi que leurs éventuels tautomères et sels d'addition à un acide ou une base, acceptables dans le domaine de l'agriculture.

**6.** Compositions fongicides selon la revendication 1, **caractérisées en ce que** le composé (I) est choisi parmi la 2,6-dichloro-*N*-{[3-chloro-5-(trifluorométhyl)-2-pyridinyl] méthyl}benzamide, la *N*-{[3-chloro-5-(trifluorométhyl)-2-pyridinyl] méthyl}-2-fluoro-6-nitrobenzamide et la *N*- {[3-chloro-5-(trifluorométhyl)-2-pyridinyl]méthyl}-2-mé-thyl-6-nitrobenzamide et le composé (II) est le propamocarbe.

**7.** Compositions fongicides selon la revendication 6, **caractérisées en ce que** le composé (I) est la 2,6-dichloro-*N*-{[3-chloro-5-(trifluorométhyl)- 2-pyridinyl] méthyl}benzamide et que le composé (II) est le propamocarbe.

**8.** Compositions fongicides selon l'une des revendications précédentes, **caractérisées en ce qu'**elles comprennent au moins un composé de formule (I) et au moins un composé (II), le rapport composé (I)/composé (II) étant compris entre 1/500 et 1/1.

**9.** Compositions fongicides selon la revendication 8, **caractérisées en ce que** le rapport composé (I)/composé (In est compris entre 1/200 et 1/5.

**10.** Compositions fongicides selon la revendication 9, **caractérisées en ce que** le rapport composé (I)/composé (II) est compris entre 1/150 et 1/10.

**11.** Compositions fongicides selon la revendication 1, **caractérisées en ce que** le rapport composé (I)/composé (II) est choisi de manière à produire un effet synergique.

**12.** Compositions fongicides synergiques selon la revendication précédente, **caractérisées en ce que** le rapport composé (I)/composé (II) est compris entre 1/200 et 1/5.

**13.** Compositions fongicides synergiques selon la revendication précédente, **caractérisées en ce que** le rapport composé (I)/composé (II) est compris entre 1/140 et 1/10.

**14.** Compositions fongicides selon l'une des revendications précédentes, **caractérisées en ce qu'**elles comprennent outre les composés (I) et (II) un support inerte convenable en agriculture et éventuellement un tensioactif convenable en agriculture.

**15.** Compositions fongicides selon l'une des revendications précédentes, **caractérisées en ce qu'**elles comprennent de 0,5 à 99 % de la combinaison du composé (I) et du composé (II).

**16.** Procédé de lutte, à titre curatif ou préventif, contre les champignons phytopathogènes des cultures, **caractérisé en ce que** l'on applique sur le sol où poussent ou où sont susceptibles de pousser les végétaux, sur les feuilles et/ou les fruits des végétaux ou sur les semences des végétaux, une quantité efficace (agronomiquement efficace) et non phytotoxique d'une composition fongicide selon l'une des revendications 1 à 15.

**17.** Procédé selon la revendication 16, **caractérisé en ce que** la composition fongicide est appliquée par pulvérisation d'un liquide sur les parties aériennes des cultures à traiter.

**18.** Procédé selon l'une des revendications 16 ou 17, **caractérisé en ce que** la quantité de composition fongicide correspond à une dose de composé (I) et de composé (II) comprise entre environ 1 g/ha et environ 1000 g/ha.

**19.** Procédé selon l'une des revendications 16 à 18, **caractérisé en ce que** la culture traitée est la tomate, la pomme de terre ou la vigne.

**20.** Procédé selon la revendication précédente, caractérisé en ce le champignon phytopathogène traité est le mildiou de la tomate, de la pomme de terre et de la vigne.

**21.** Produit comprenant un composé de formule (I) et un composé de formule (II) en tant que préparation combinée pour utilisation simultanée, séparée ou séquentielle dans la lutte contre les champignons phytopathogènes des cultures en un lieu.

## Claims

1. **1.** Fungicidal compositions comprising:

a) at least one pyridylmethylbenzamide derivative of formula (I)

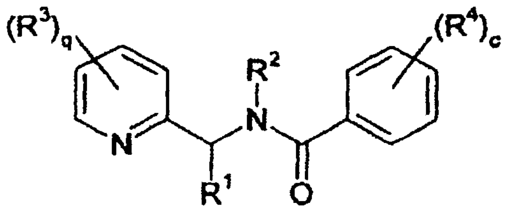

(I)

in which:

- $R^1$ is selected from a hydrogen atom, an optionally substituted alkyl radical and an optionally substituted acyl radical;
- $R^2$ is selected from a hydrogen atom and an optionally substituted alkyl radical;
- $R^3$ and $R^4$, which are identical or different, are selected independently from a halogen atom, a hydroxyl radical, a cyano radical, a nitro radical, an $-SF_5$ radical, a trialkylsilyl radical, an optionally substituted amino radical, an acyl radical, and a group E, OE or SE in which E is selected from an alkyl, alkenyl, alkynyl, cycloalkyl, cycloalkenyl, aryl and heterocyclyl radical, each of which can be optionally substituted;
- c represents 0, 1, 2, 3 or 4;
- q represents 0, 1, 2, 3 or 4;

and their possible optical and/or geometric isomers, tautomers and addition salts with an acid or a base that are acceptable in the agricultural field;
and
b) at least one compound (II), which is propamocarb.

**2.** Fungicidal compositions according to Claim 1,
**characterized in that** the compound (I) possesses one of the following characteristics, taken individually or in combination:

- $R^1$ and $R^2$, which are identical or different, are selected independently from a hydrogen atom and an optionally substituted alkyl radical;
- $R^3$ and $R^9$, which are identical or different, are selected independently from a halogen atom, a hydroxyl radical, a nitro radical, an optionally substituted amino radical, an acyl radical, and a group E, OE or SE in which E is selected from an alkyl, cycloalkyl, phenyl and heterocyclyl radical, each of which can be optionally substituted;
- c represents 0, 1, 2 or 3;
- q represents 0, 1, 2 or 3;

and their possible optical and/or geometric isomers, tautomers and addition salts with an acid or a base that are acceptable in the agricultural field.

**3.** Fungicidal compositions according to Claim 1,
**characterized in that** the compound (I) possesses one of the following characteristics, taken individually or in combination:

- $R^1$ and $R^2$, which are identical or different, are selected independently from a hydrogen atom and a methyl or ethyl radical;
- $R^3$ and $R^4$, which are identical or different, are selected independently from a halogen atom, a nitro radical, an optionally substituted amino radical and an alkyl, cycloalkyl, phenyl or heterocyclyl radical, each of which can be optionally substituted;
- c represents 1 or 2;

- q represents 1 or 2;

and their possible optical and/or geometric isomers, tautomers and addition salts with an acid or a base that are acceptable in the agricultural field.

**4.** Fungicidal compositions according to Claim 1, **characterized in that** the compound (I) possesses one of the following characteristics:

- $R^1$ and $R^2$ each represent a hydrogen atom;
- $R^3$ and $R^9$, which are identical or different, are selected independently from a halogen atom, a nitro radical, an alkyl radical and a trifluoromethyl radical;
- c and q represent, independently of one another, 2;

and their possible optical and/or geometric isomers, tautomers and addition salts with an acid or a base that are acceptable in the agricultural field.

**5.** Fungicidal compositions according to Claim 1, **characterized in that** the compound of formula (I) is selected from:

- 2,6-dichloro-*N*-{[3-chloro-5-(trifluoromethyl)-2-pyridinyl]methyl}benzamide,
- N-{[3-chloro-5-(trifluoromethyl)-2-pyridinyl]-methyl}-2-fluoro-6-nitrobenzamide, and
- *N*-{[3-chloro-5-(trifluoromethyl)-2-pyridinyl]-methyl}-2-methyl-6-nitrobenzamide,

and their possible tautomers and addition salts with an acid or a base that are acceptable in the agricultural field.

**6.** Fungicidal compositions according to Claim 1, **characterized in that** the compound (I) is selected from 2,6-dichloro-*N*-{ [3-chloro-5-(trifluoromethyl)-2-pyridinyl]methyl}benzamide, *N*-{[3-chloro-5-(trifluoromethyl)-2-pyridinyl]methyl}-2-fluoro-6-nitrobenzamide, and *N*-{[3-chloro-5-(trifluoromethyl)-2-pyridinyl]-methyl}-2-methyl-6-nitrobenzamide and the compound (II) is propamocarb.

**7.** Fungicidal compositions according to Claim 6, **characterized in that** the compound (I) is 2,6-dichloro-*N*-{[3-chloro-5-(trifluoromethyl)-2-pyridinyl]methyl}-benzamide and **in that** the compound (II) is propamocarb.

**8.** Fungicidal compositions according to one of the preceding claims, **characterized in that** they comprise at least one compound of formula (I) and at least one compound (II), the compound (I)/compound (II) ratio being between 1/500 and 1/1.

**9.** Fungicidal compositions according to Claim 8, **characterized in that** the compound (I)/compound (II) ratio is between 1/200 and 1/5.

**10.** Fungicidal compositions according to Claim 9, **characterized in that** the compound (I)/compound (II) ratio is between 1/150 and 1/10.

**11.** Fungicidal compositions according to Claim 1, **characterized in that** the compound (I)/compound (II) ratio is chosen so as to produce a synergistic effect.

**12.** Synergistic fungicidal compositions according to the preceding claim, **characterized in that** the compound (I)/compound (II) ratio is between 1/200 and 1/5.

**13.** Synergistic fungicidal compositions according to the preceding claim, **characterized in that** the compound (I)/compound (II) ratio is between 1/140 and 1/10.

**14.** Fungicidal compositions according to one of the preceding claims, **characterized in that** they comprise, in addition to compounds (I) and (II), an agriculturally suitable inert vehicle and optionally an agriculturally suitable surfactant.

**15.** Fungicidal compositions according to one of the preceding claims, **characterized in that** they contain from 0.5 to 99% of the combination of compound (I) and compound (II).

**16.** Method of curatively or preventively combating phytopathogenic fungi in crops, **characterized in that** an effective

(agronomically effective), nonphytotoxic amount of a fungicidal composition according to one of Claims 1 to 15 is applied to the soil in which the plants are growing or are liable to grow, to the leaves and/or the fruits of the plants or to the seeds of the plants.

**17.** Method according to Claim 16, **characterized in that** the fungicidal composition is applied by spraying a liquid onto the aerial parts of the crops to be treated.

**18.** Method according to either of Claims 16 and 17, **characterized in that** the amount of fungicidal composition corresponds to a dose of compound (I) and of compound (II) between approximately 1 g/ha and approximately 1 000 g/ha.

**19.** Method according to one of Claims 16 to 18, **characterized in that** the treated crop is tomato, potato or grapevine.

**20.** Method according to the preceding claim, **characterized in that** the phytopathogenic fungus treated is downy mildew in tomatoes, potatoes and grapevines.

**21.** Product comprising a compound of formula (I) and a compound of formula (II) as a combined preparation for simultaneous, separate or sequential use in the control of phytopathogenic fungi in crops in one locus.

**Patentansprüche**

**1.** Fungizide Zusammensetzungen, enthaltend:

a) mindestens ein Pyridylmethylbenzamidderivat der Formel (I),

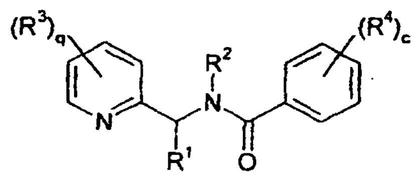

(I)

in der

- $R^1$ aus der Reihe Wasserstoffatom, gegebenenfalls substituierter Alkylrest und gegebenenfalls substituierter Acylrest stammt;
- $R^2$ aus der Reihe Wasserstoffatom und gegebenenfalls substituierter Alkylrest stammt;
- $R^3$ und $R^9$, die gleich oder verschieden sind, stammen unabhängig aus der Reihe Halogenatom, Hydroxyrest, Cyanorest, Nitrorest, -$SF_5$-Rest, Trialkylsilylrest, gegebenenfalls substituierter Aminorest, Acylrest und Gruppe E, OE oder SE, wobei E aus der Reihe Alkyl-, Alkenyl-, Alkinyl-, Cycloalkyl-, Cycloalkenyl-, Aryl- und Heterocyclylrest, die jeweils gegebenenfalls substituiert sein können, stammt;
- c 0, 1, 2, 3 oder 4 bedeutet;
- q 0, 1, 2, 3 oder 4 bedeutet;

sowie ihre möglichen optischen und/oder geometrischen Isomere, Tautomere und Additionssalze mit einer Säure oder einer Base, die auf dem Gebiet der Landwirtschaft annehmbar sind;
und

b) mindestens eine Verbindung (II), bei der es sich um Propamocarb handelt.

**2.** Fungizide Zusammensetzungen nach Anspruch 1, **dadurch gekennzeichnet, daß** die Verbindung (I) eine der folgenden Eigenschaften, allein oder in Kombination, aufweist:

- $R^1$ und $R^2$, die gleich oder verschieden sind, stammen unabhängig aus der Reihe Wasserstoffatom und ge-

gebenenfalls substituierter Alkylrest;

- $R^3$ und $R^4$, die gleich oder verschieden sind, stammen unabhängig aus der Reihe Halogenatom, Hydroxyrest, Nitrorest, gegebenenfalls substituierter Aminorest, Acylrest und Gruppe E, OE oder SE, wobei E aus der Reihe Alkyl-, Cycloalkyl-, Phenyl- und Heterocyclylrest, der jeweils gegebenenfalls substituiert sein kann, stammt;
- c bedeutet 0, 1, 2 oder 3;
- q bedeutet 0, 1, 2 oder 3;

sowie ihre möglichen optischen und/oder geometrischen Isomere, Tautomere und Additionssalze mit einer Säure oder einer Base, die auf dem Gebiet der Landwirtschaft annehmbar sind.

**3.** Fungizide Zusammensetzungen nach Anspruch 1, **dadurch gekennzeichnet, daß** die Verbindung (I) eine der folgenden Eigenschaften, allein oder in Kombination, aufweist:

- $R^1$ und $R^2$, die gleich oder verschieden sind, stammen unabhängig aus der Reihe Wasserstoffatom und Methyl- oder Ethylrest;
- $R^3$ und $R^4$, die gleich oder verschieden sind, stammen unabhängig aus der Reihe Halogenatom, Nitrorest, gegebenenfalls substituierter Aminorest, und Alkyl-, Cycloalkyl-, Phenyl- und Heterocyclylrest, der jeweils gegebenenfalls substituiert sein kann;
- c bedeutet 1 oder 2;
- q bedeutet 1 oder 2;

sowie ihre möglichen optischen und/oder geometrischen Isomere, Tautomere und Additionssalze mit einer Säure oder einer Base, die auf dem Gebiet der Landwirtschaft annehmbar sind.

**4.** Fungizide Zusammensetzungen nach Anspruch 1, **dadurch gekennzeichnet, daß** die Verbindung (I) eine der folgenden Eigenschaften aufweist:

- $R^1$ und $R^2$ bedeuten jeweils das Wasserstoffatom;
- $R^3$ und $R^4$, die gleich oder verschieden sind, stammen unabhängig aus der Reihe Halogenatom, Nitrorest, Alkylrest und Trifluormethylrest;
- c und q bedeuten unabhängig voneinander 2;

sowie ihre möglichen optischen und/oder geometrischen Isomere, Tautomere und Additionssalze mit einer Säure oder einer Base, die auf dem Gebiet der Landwirtschaft annehmbar sind.

**5.** Fungizide Zusammensetzungen nach Anspruch 1, **dadurch gekennzeichnet, daß** die Verbindung der Formel (I) aus der Reihe

- 2,6-Dichlor-N-{[3-*N*-chlor-5-(trifluormethyl)-2-pyridinyl]methyl}benzamid,
- *N*-{[3-Chlor-5-(trifluormethyl)-2-pyridinyl]-methyl}-2-fluor-6-nitrobenzamid und
- *N*-{[3-Chlor-5-(trifluormethyl)-2-pyridinyl]-methyl}-2-methyl-6-nitrobenzamid

sowie ihren möglichen Tautomeren und Säure- oder Basenadditionssalzen, die auf dem Gebiet der Landwirtschaft annehmbar sind, stammt.

**6.** Fungizide Zusammensetzungen nach Anspruch 1, **dadurch gekennzeichnet, daß** die Verbindung (I) aus der Reihe 2,6-Dichlor-*N*-{[3-chlor-5-(trifluormethyl)-2-pyridinyl]methyl}benzamid, N-{[3-Chlor-5-(trifluormethyl)-2-pyridinyl]methyl}-2-fluor-6-nitrobenzamid und *N*-{[3-Chlor-5-(trifluormethyl)-2-pyridinyl]methyl}-2-methyl-6-nitrobenzamid stammt und es sich bei der Verbindung (II) um Propamocarb handelt.

**7.** Fungizide Zusammensetzungen nach Anspruch 6, **dadurch gekennzeichnet, daß** es sich bei der Verbindung (I) um 2,6-Dichlor-*N*-{[3-chlor-5-(trifluormethyl)-2-pyridinyl]methyl}benzamid und bei der Verbindung (II) um Propamocarb handelt.

**8.** Fungizide Zusammensetzungen nach einem der vorhergehenden Ansprüche, **dadurch gekennzeichnet, daß** sie mindestens eine Verbindung der Formel (I) und mindestens eine Verbindung (II) enthalten, wobei das Verhältnis Verbindung (I)/Verbindung (II) zwischen 1/500 und 1/1 liegt.

**9.** Fungizide Zusammensetzungen nach Anspruch 8, **dadurch gekennzeichnet, daß** das Verhältnis Verbindung (I) /Verbindung (II) zwischen 1/200 und 1/5 liegt.

**10.** Fungizide Zusammensetzungen nach Anspruch 9, **dadurch gekennzeichnet, daß** das Verhältnis Verbindung (I) /Verbindung (II) zwischen 1/150 und 1/10 liegt.

**11.** Fungizide Zusammensetzungen nach Anspruch 1, **dadurch gekennzeichnet, daß** das Verhältnis Verbindung (I) /Verbindung (II) so gewählt wird, daß ein synergistischer Effekt erzielt wird.

**12.** Synergistische fungizide Zusammensetzungen nach dem vorhergehenden Anspruch **dadurch gekennzeichnet, daß** das Verhältnis Verbindung (I)/Verbindung (II) zwischen 1/200 und 1/5 liegt.

**13.** Synergistische fungizide Zusammensetzungen nach dem vorhergehenden Anspruch **dadurch gekennzeichnet, daß** das Verhältnis Verbindung (I)/Verbindung (II) zwischen 1/140 und 1/10 liegt.

**14.** Fungizide Zusammensetzungen nach einem der vorhergehenden Ansprüche **dadurch gekennzeichnet, daß** sie außer den Verbindungen (I) und (II) einen landwirtschaftlich annehmbaren inerten Träger sowie gegebenenfalls ein landwirtschaftlich annehmbares Tensid enthalten.

**15.** Fungizide Zusammensetzungen nach einem der vorhergehenden Ansprüche **dadurch gekennzeichnet, daß** sie 0,5 bis 99% der Kombination von Verbindung (I) und Verbindung (II) enthalten.

**16.** Verfahren für die kurative oder präventive Bekämpfung von phytopathogenen Pilzen an Nutzpflanzen, **dadurch gekennzeichnet, daß** man eine wirksame (landwirtschaftlich wirksame), nicht phytotoxische Menge an einer fungiziden Zusammensetzung nach einem der Ansprüche 1 bis 5 auf den Boden, wo die Pflanzen wachsen oder wachsen sollen, auf die Blätter und/oder die Früchte von Pflanzen oder auf die Samen von Pflanzen ausbringt.

**17.** Verfahren nach Anspruch 16, **dadurch gekennzeichnet, daß** die fungizide Zusammensetzung durch Spritzen einer Flüssigkeit auf die oberirdischen Teile der zu behandelnden Nutzpflanzen ausgebracht wird.

**18.** Verfahren nach einem der Ansprüche 16 oder 17, **dadurch gekennzeichnet, daß** die Menge an fungizider Zusammensetzung einer Aufwandmenge an Verbindung (I) und Verbindung (II) zwischen ungefähr 1 g/ha und ungefähr 1000 g/ha entspricht.

**19.** Verfahren nach einem der Ansprüche 16 bis 18, **dadurch gekennzeichnet, daß** es sich bei der behandelten Nutzpflanze um die Tomate, die Kartoffel oder die Rebe handelt.

**20.** Verfahren nach dem vorhergehenden Anspruch, **dadurch gekennzeichnet, daß** es sich bei dem behandelten phytopathogenen Pilz um die Braunfäule der Tomate, die Kraut- und Knollenfäule der Kartoffel und um den Falschen Mehltau der Rebe handelt.

**21.** Produkt, enthaltend eine Verbindung der Formel (I) und eine Verbindung (II) als Kombinationspräparat für die gleichzeitige, getrennte oder aufeinanderfolgende Verwendung bei der Bekämpfung von phytopathogenen Pilzen an Nutzpflanzen an einem Standort.